# EUROPÄISCHE PATENTSCHRIFT

(11) **EP 4 377 075 B1**
(45) Veröffentlichungstag und Bekanntmachung des Hinweises auf die Patenterteilung: **10.09.2025**
(21) Anmeldenummer: 22746959.0
(22) Anmeldetag: 12.07.2022
(51) Int. Cl.: B29D 30/06, C08L 23/22, C08L 23/28, B29C 43/36, B29K 19/00, B29K 23/00

(54) **VULKANISIERBARE ZUSAMMENSETZUNG FÜR DIE HERSTELLUNG EINES VULKANISATIONSBALGES**
VULCANIZABLE COMPOSITION FOR PRODUCING A VULCANIZATION BLADDER
COMPOSITION VULCANISABLE POUR LA PRODUCTION D'UN SOUFFLET DE VULCANISATION

(30) Priorität: 29.07.2021 DE 102021208181
(43) Veröffentlichungstag der Anmeldung: 05.06.2024
(73) Patentinhaber: Continental Reifen Deutschland GmbH, 30175 Hannover (DE)
(72) Erfinder: PLEVAK, Zdeno, 30165 Hannover (DE); KRÜGER, Jörn, 30165 Hannover (DE); TORBRÜGGE, Thorsten, 30165 Hannover (DE)
(74) Vertreter: Continental Corporation
(86) Internationale Anmeldenummer: PCT/DE2022/200155
(87) Internationale Veröffentlichungsnummer: WO 2023/006160

(56) Entgegenhaltungen:
- EP-A1- 1 078 955
- EP-A1- 1 914 063
- GB-A- 870 947
- US-A1- 2005 112 223
- US-A1- 2018 133 985

## Beschreibung

Die Erfindung betrifft eine vulkanisierbare Zusammensetzung für die Herstellung eines Vulkanisationsbalges, ein Vulkanisat, herstellbar durch Vulkanisation einer entsprechenden vulkanisierbaren Zusammensetzung, einen Vulkanisationsbalg zur Verwendung bei der Vulkanisation von Fahrzeugreifen, eine Vulkanisationsvorrichtung zur Vulkanisation von Fahrzeugreifen, und die Verwendung eines entsprechenden Vulkanisationsbalgs bei der Vulkanisation von Fahrzeugreifen. Offenbart wird zudem die Verwendung einer entsprechenden vulkanisierbaren Zusammensetzung bei der Herstellung von Vulkanisationsbalgen und ein Verfahren zur Herstellung von Fahrzeugreifen.

Der Gegenstand der Erfindung ist in den beigefügten Ansprüchen definiert.

Die Herstellung von leistungsfähigen Fahrzeugluftreifen ist ein Gebiet der Technik, welches in den letzten Jahrzenten zahlreiche Verbesserungen und Weiterentwicklungen erfahren hat, mit denen immer bessere Hochleistungsprodukte bereitgestellt werden können, die die stetig steigenden Anforderungen erfüllen.

Einer der finalen Fertigungsschritte bei der Herstellung moderner Fahrzeugluftreifen besteht zumeist in der Vulkanisation des noch nicht ausgehärteten Reifenrohlings, des sogenannten "grünen Reifens" ("green tire"). Dies erfolgt regelmäßig durch das Einbringen des aus seinen Einzelteilen weitgehend zusammengesetzten, aber noch nicht vulkanisierten Fahrzeugreifens in eine Vulkanisationsvorrichtung. Diese umfasst regelmäßig eine Vulkanisationsform, in die der Reifenrohling gegeben wird und die an ihrer Innenseite über eine strukturierte Oberfläche verfügt, mit der das spätere Profil auf den Fahrzeugreifen übertragen werden soll.

Um sicherzustellen, dass der Reifen die Form korrekt ausfüllt und dass das an der Innenseite der Vulkanisationsform vorgesehene Profil vollständig auf den vulkanisierten Reifen übertragen wird, ist es notwendig, den Reifenrohling beim Prozess des Vulkanisierens in die Form und das an den Seitenwänden befindliche Profil zu pressen. Dies wird in der Praxis durch einen sogenannten Vulkanisationsbalg erreicht, welcher auch als Heizbalg bezeichnet wird. Dieser aufblasbare Vulkanisationsbalg wird im Inneren des Reifenrohlings platziert, sodass seine Expansion in das Innere der Karkasse hinein derart erfolgen kann, dass der Reifenrohling nach Außen in die Vulkanisationsform gepresst wird. In der Praxis wird der Vulkanisationsbalg beim Vulkanisieren mit einem heißen Prozessgas, beispielsweise Dampf, beaufschlagt, um dem zu vulkanisierenden Reifenrohling von der Innenseite die zur Vulkanisation notwendige thermische Energie zuzuführen.

Dem Vulkanisationsbalg kommt somit beim Herstellungsprozess von modernen Fahrzeugluftreifen eine besondere Bedeutung zu. Gleichzeitig unterliegt der aus Gummi gefertigte Vulkanisationsbalg hohen Belastungen, insbesondere thermischen und mechanischen Belastungen, und ist zudem beständig dem Prozessgas ausgesetzt. Dadurch sind Vulkanisationsbalge regelmäßig nur für eine begrenzte Anzahl von Vulkanisationszyklen einsetzbar. Angesichts der Kosten, die durch den Austausch eines Vulkanisationsbalgs verursacht werden und des Arbeitsaufwands beim Wechsel bzw. bei der kontinuierlichen Qualitätsprüfung der alternden Vulkanisationsbalge, leisten die Vulkanisationsbalge einen spürbaren Beitrag zu den Gesamtkosten der Reifenfertigung.

Hierzu kommt, dass es im Falle eines Materialversagens im Vulkanisationsbalg während der Vulkanisation zu Produktionsfehlern kommen kann, die zu unerwünschtem Ausschuss in der Reifenproduktion führen.

Selbst wenn es nicht zu einem makroskopischen Riss im Vulkanisationsbalg kommt, lässt sich in der Praxis feststellen, dass die Qualität von Fahrzeugluftreifen, welche mit gealterten Vulkanisationsbalgen hergestellt werden, ab einem gewissen Zeitpunkt abnimmt, sodass die Gefahr besteht, dass die erforderlichen Spezifikationen nicht länger erreicht werden. Diese Abnahme der Reifenqualität beim Einsatz gealterter Vulkanisationsbalge wurde dabei insbesondere für solche Fahrzeugluftreifen festgestellt, in deren Karkasse das Material Rayon eingesetzt wird.

Während der Fahrzeugluftreifen selbst, insbesondere sein Aufbau und seine Materialien, seit Jahren im Fokus der Entwicklung stehen, erfahren die Vulkanisationsbalge, die zu seiner Herstellung verwendet werden, vergleichsweise wenig Aufmerksamkeit.

In der GB 870947A wird eine vulkanisierbare Kautschukzusammensetzung offenbart umfassend einen Butylkautschuk, einen halogenierten Butylkautschuk, ein hochungesättigtes kautschukartiges Copolymer eines konjugierten Diolefins mit Styrol und ein mit 2,6-Dimethylol-4-Kohlenwasserstoff substituiertes Phenol, das im monozyklischen oder multizyklischen (polymeren) Zustand vorliegen kann.

Die EP 1914063A1 betrifft einen ausdehnbaren Vulkanisationsbalg zur Verwendung beim Vulkanisieren von Gummiprodukten. Die Blase besteht aus einer inneren Schicht und einer äußeren Schicht. Die innere Schicht umfasst eine Gummizusammensetzung, die, basierend auf Gewichtsteilen pro 100 Gewichtsteilen Gummi (phr), einen Isobutylencopolymergummi umfasst, der aus Butylgummi und/oder Halobutylgummi ausgewählt ist, wobei der Butylgummi ein Copolymer aus Isobutylen und Isopren umfasst, das von etwa 0,5 bis etwa 5 Gewichtsprozent Einheiten enthält, die von Isopren abgeleitet sind; wobei der Halobutylgummi ein halogenierter Butylgummi ist, der ein chloriertes oder bromiertes Copolymer aus Isobutylen und Isopren umfasst, das von etwa 0,5 bis etwa 5 Gewichtsprozent Einheiten enthält, die von Isopren abgeleitet sind, und wobei die äußere Schicht eine Gummizusammensetzung umfasst, die einen Silikongummi umfasst.

Die US 2005112223A1 betrifft einen dehnbaren Vulkanisationsbalg aus einer Butylkautschukzusammensetzung, die ein mikroverkapseltes Polysiloxan-Schmiermittel enthält, um der Oberfläche des Balgs Schmierfähigkeit zu verleihen. Die Erfindung betrifft außerdem ein Verfahren zum Vulkanisieren von Reifen mit einem solchen Heizbalg.

Die US 2018133985A1 betrifft ein Verfahren zur Herstellung eines Reifenvulkanisierungsbalgs, wobei das Verfahren die Schritte (i) Bereitstellen eines vulkanisierten Reifenvulkanisierungsbalgs; und (ii) Aufbringen einer Luftbarrierezusammensetzung auf den vulkanisierten Reifenvulkanisierungsbalg zum Bilden einer Luftbarriereschicht umfasst. Ein Verfahren zum Wiederherstellen der Luftrückhaltung eines Reifenvulkanisierungsbalgs, wobei das Verfahren die Schritte (i) Bereitstellen eines gebrauchten Reifenvulkanisierungsbalgs; und (ii) Aufbringen einer Luftbarrierezusammensetzung auf den gebrauchten Reifenvulkanisierungsbalg zum Bilden einer Luftbarriereschicht umfasst.

Die EP 1078955A1 betrifft ausdehnbare Blasen aus Butylkautschuk zur Verwendung in Vulkanisationspressen für Kohlenwasserstoffkautschuke wie beispielsweise Luftreifen. Die Blasen bestehen aus einem vernetzten Elastomer, das aus sich wiederholenden Isobutyleneinheiten besteht, und die Blasenzusammensetzung enthält Lecithin, insbesondere ein modifiziertes Lecithin, vorzugsweise in flüssiger Form, das in der Blasenzusammensetzung dispergiert ist. Die Blasenzusammensetzung kann auch Rizinusöl, Maisöl und/oder Sojaöl enthalten. Die Blasenzusammensetzung kann außerdem mindestens eines der folgenden Materialien enthalten: Graphit und Polytetrafluorethylenpulver.

Die Erfindung betrifft außerdem ein Verfahren zum Vulkanisieren von Reifen unter Verwendung eines solchen Butylkautschukbalgs.

Die zentrale Aufgabe der vorliegenden Erfindung war es, die vorstehend beschriebenen Nachteile des Standes der Technik zu beheben oder zumindest abzumildern.

Es war somit die Aufgabe der vorliegenden Erfindung, einen Vulkanisationsbalg sowie ein Verfahren zu dessen Herstellung anzugeben, welcher über ausgezeichnete mechanische Eigenschaften verfügt und unter thermischer und/oder mechanischer Belastung eine besonders lange Haltbarkeit aufweist.

Der anzugebende Vulkanisationsbalg sollte dabei insbesondere beim Einsatz von Wasserdampf als Prozessgas auch nach vielen Vulkanisationszyklen eine hohe Dampfretention, d.h. eine geringe Dampfpermeabilität, zeigen.

Hierbei war es wünschenswert, dass der anzugebende Vulkanisationsbalg den auftretenden Belastungen nicht nur für viele Vulkanisationszyklen standhält, sondern dass die mit dem Vulkanisationsbalg herstellbaren Fahrzeugluftreifen auch nach einer hohen Anzahl von Vulkanisationszyklen eine möglichst gleichbleibende und vorteilhafte Qualität aufweisen.

Insoweit war es eine ergänzende Vorgabe, dass die anzugebenden Vulkanisationsbalge insbesondere eine hohe Kompatibilität mit solchen Fahrzeugluftreifen aufweisen sollten, in deren Karkasse das Material Rayon eingesetzt wird, da diese nach Erkenntnis der Erfinder besonders anfällig für Defekte sind, die beim Einsatz von gealterten Vulkanisationsbalgen auftreten können.

Ausgehend hiervon war es eine wichtige Aufgabe der vorliegenden Erfindung, eine vulkanisierbare Zusammensetzung und ein hieraus herstellbares Vulkanisat anzugeben, aus dem ein entsprechender Vulkanisationsbalg mit den vorstehend beschriebenen Vorteilen erhalten werden kann.

Im Lichte der vorstehenden Ausführungen war es eine ergänzende Aufgabe der vorliegenden Erfindung, eine Vulkanisierungsvorrichtung zur Vulkanisation von Fahrzeugreifen anzugeben.

Ebenso sollte eine Verwendung eines entsprechenden Vulkanisationsbalgs bei der Vulkanisation von Fahrzeugreifen angegeben werden.

Die Erfinder der vorliegenden Erfindung haben erkannt, dass sich die vorstehend angegebenen Aufgaben überraschenderweise lösen lassen, wenn die zur Herstellung der Vulkanisationsbalge eingesetzte vulkanisierbare Zusammensetzung in spezifischer Weise angepasst wird, wie es nachfolgend offenbart ist.

Insbesondere ist es zur Lösung der vorstehend beschriebenen Aufgaben wichtig, die zur Herstellung eingesetzte vulkanisierbare Zusammensetzung, die im Stand der Technik zumeist aus Isobuten-Isopren-Kautschuk in Verbindung mit Chloropren-Kautschuk bestehen, anzupassen. Die Erfinder der vorliegenden Erfindung haben dabei erkannt, dass zur Lösung der vorstehend beschriebenen Aufgaben eine vulkanisierbare Zusammensetzung eingesetzt werden muss, die über einen hohen Gehalt an Isobuten-Isopren-Kautschuk und darüber hinaus über einen spezifischen Gehalt an halogenierten Isobuten-Isopren-Kautschuken verfügt.

Die vorstehend genannten Aufgaben werden entsprechend durch vulkanisierbare Zusammensetzungen, Vulkanisate, Vulkanisationsbalge, Vulkanisationsvorrichtungen, Verwendungen und Verfahren gelöst, wie sie in den Ansprüchen definiert bzw. nachfolgend offenbart sind. Bevorzugte erfindungsgemäße Ausgestaltungen ergeben sich aus den Unteransprüchen und den nachfolgenden Ausführungen.

Solche Merkmale erfindungsgemäßer Gegenstände, die nachfolgend als bevorzugt bezeichnet sind, werden in besonders bevorzugten Ausführungsformen mit anderen als bevorzugt bezeichneten Merkmalen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal mit einem oder mehreren weiteren Merkmalen kombiniert wird, die in irgendeinem Ausmaß als bevorzugt bezeichnet werden. Merkmale bevorzugter erfindungsgemäßer Vulkanisate, Vulkanisationsbalge, Vulkanisationsvorrichtungen, Verwendungen und Verfahren ergeben sich aus den Merkmalen bevorzugter vulkanisierbarer Zusammensetzungen.

Die Erfindung betrifft eine vulkanisierbare Zusammensetzung für die Herstellung eines Vulkanisationsbalges, umfassend:
- einen oder mehrere halogenierte Isobuten-Isopren-Kautschuke in einer Gesamtmenge im Bereich von 2 bis 15 phr, und
- einen oder mehrere Isobuten-Isopren-Kautschuke in einer Gesamtmenge im Bereich von 85 bis 98 phr.

Die erfindungsgemäße vulkanisierbare Zusammensetzung ist für die Herstellung von Vulkanisationsbalgen geeignet. In Übereinstimmung mit dem fachmännischen Verständnis bedeutet der Ausdruck vulkanisierbar, dass die vulkanisierbare Zusammensetzung unter Zufuhr von thermischer Energie sowie ggf. Druck vernetzbar und in ein Vulkanisat überführbar ist. Somit umfasst die vulkanisierbare Zusammensetzung neben den vorstehend definierten Kautschuken weitere Bestandteile, die zumindest der Vulkanisierbarkeit des Systems dienen. Im Gegensatz zu den vorstehend definierten Kautschuken ist die erfindungsgemäße vulkanisierbare Zusammensetzung hinsichtlich der hierfür verwendeten Additive jedoch sehr flexibel, sodass die vulkanisierbare Zusammensetzung weitere Bestandteile enthalten kann, wie sie auch nachfolgend angegeben sind. In erfindungsgemäßen vulkanisierbaren Zusammensetzungen erfolgt die Vulkanisation zumeist unter Einsatz von Aktivatoren, beispielsweise Zinkoxid, beispielsweise in Kombination mit geeigneten Vernetzersystemen. Entsprechende Vulkanisationsverfahren unter Einsatz von Metalloxiden, wie sie beispielsweise auch für die Vernetzung von Chloropren-Kautschuk eingesetzt werden, sind dem Fachmann dabei grundsätzlich bekannt.

Die im Rahmen der vorliegenden Erfindung verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Die erfindungsgemäße vulkanisierbare Zusammensetzung umfasst, ähnlich wie einige aus dem Stand der Technik bekannte vulkanisierbare Zusammensetzung für die Herstellung von Vulkanisationsbalgen, Isobuten-Isopren-Kautschuk. Hierbei muss nach Einschätzung der Erfinder jedoch ein besonders hoher Anteil an Isobuten-Isopren-Kautschuk eingesetzt werden.

Isobuten-Isopren-Kautschuk, welcher auch kurz als Butylkautschuk bezeichnet wird und regelmäßig das Kurzzeichen IIR zugewiesen bekommt, ist dem Fachmann im Bereich der Kautschukverarbeitung bekannt. Es handelt sich um einen Synthese-Kautschuk, welcher durch Copolymerisation von Isobuten und Isopren hergestellt wird. In den erfindungsgemäßen vulkanisierbaren Zusammensetzungen können mehrere verschiedene Isobuten-Isopren-Kautschuke eingesetzt werden, die sich beispielsweise im Gehalt an Isopren unterscheiden können. Wichtig ist jedoch, dass die Gesamtmenge dieser Isobuten-Isopren-Kautschuke im vorstehend angegebenen Bereich liegt.

Über den Isobuten-Isopren-Kautschuk hinaus umfasst die erfindungsgemäße vulkanisierbare Zusammensetzung halogenierten Isobuten-Isopren-Kautschuk. Auch halogenierte Isobuten-Isopren-Kautschuke sind dem Fachmann im Bereich der Kautschukindustrie grundsätzlich bekannt. Es handelt sich hierbei ebenfalls um Copolymere von Isobuten und Isopren, wobei die Isopreneinheiten im Kautschuk zumindest teilweise halogeniert sind. Bei einer Halogenierung mit Chlor bzw. Brom spricht der Fachmann von Chlorobutyl (CIIR) bzw. Bromobutyl (BIIR).

Im Lichte der vorstehenden Ausführungen ist für den Fachmann ersichtlich, dass es sich bei den vorstehend angegebenen Isobuten-Isopren-Kautschuken und halogenierten Isobuten-Isopren-Kautschuken um unterschiedliche Materialien handelt, die danach unterschieden werden können, ob entlang der Polymerketten funktionelle Gruppen vorliegen, die ein Halogenatomen enthalten. Eine entsprechende Unterscheidung ist für den Fachmann mit diversen analytischen Methoden möglich. Prinzipiell geeignet sind beispielsweise sämtliche Methoden, mit denen sich die Anwesenheit von Halogenen im Material nachweisen lässt, insbesondere ³⁵Cl-NMR und ⁷⁹Br-NMR-Spektroskopie.

Mit entsprechenden erfindungsgemäßen vulkanisierbaren Zusammensetzungen lassen sich durch Vulkanisation, d. h. durch Vernetzung der Bestandteile, Vulkanisate erhalten, aus denen Vulkanisationsbalge mit ausgezeichneten Eigenschaften, insbesondere einer ausgezeichneten Beständigkeit gegen thermische Belastungen und die Exposition von Wasserdampf, erhalten lassen. Die entsprechenden erfindungsgemäßen Vulkanisationsbalge können vorteilhafterweise über eine große Anzahl von Vulkanisationszyklen bei der Herstellung von Fahrzeugluftreifen eingesetzt werden, bevor sie ausgetauscht werden müssen. Dabei zeigt sich in der Anwendung, dass auch nach zahlreichen Vulkanisationszyklen noch Fahrzeugreifen mit ausgezeichneten Eigenschaften erhalten werden, selbst wenn in den Reifenrohlingen bzw. deren Karkassen das Material Rayon eingesetzt wird.

Die Erfinder der vorliegenden Erfindung konnten ausgehend von der grundlegenden Erfindungsidee bestimmte zueinander komplementäre Bereiche für die in der vulkanisierbaren Zusammensetzung vorzusehenden Kautschukkomponenten identifizieren, mit denen besonders vorteilhafte Vulkanisate und entsprechende Vulkanisationsbalge erhalten werden können.

Bevorzugt ist nämlich eine erfindungsgemäße vulkanisierbare Zusammensetzung, umfassend einen oder mehrere halogenierte Isobuten-Isopren-Kautschuke in einer Gesamtmenge im Bereich von 3 bis 12 phr, bevorzugt im Bereich von 5 bis 10 phr. Bevorzugt ist entsprechend eine erfindungsgemäße vulkanisierbare Zusammensetzung, umfassend einen oder mehrere Isobuten-Isopren-Kautschuke in einer Gesamtmenge im Bereich von 88 bis 97 phr, bevorzugt im Bereich von 90 bis 95 phr.

Auch hinsichtlich der chemischen Natur der Kautschuke konnten die Erfinder geeignete Komponenten identifizieren. Bevorzugt ist nämlich eine erfindungsgemäße vulkanisierbare Zusammensetzung, wobei zumindest einer der halogenierten Isobuten-Isopren-Kautschuke, bevorzugt sämtliche der halogenierten Isobuten-Isopren-Kautschuke in der vulkanisierbaren Zusammensetzung, einen Anteil an von Isopren abgeleiteten Repetiereinheiten im Bereich von 1 bis 5 %, vorzugsweise im Bereich von 2 bis 4 %, aufweisen, bezogen auf die Gesamtzahl an Repetiereinheiten. Bevorzugt ist gleichfalls eine erfindungsgemäße vulkanisierbare Zusammensetzung, wobei zumindest einer der Isobuten-Isopren-Kautschuke, bevorzugt sämtliche der Isobuten-Isopren-Kautschuke in der vulkanisierbaren Zusammensetzung, einen Anteil an von Isopren abgeleiteten Repetiereinheiten im Bereich von 1 bis 5 %, vorzugsweise im Bereich von 2 bis 4 %, aufweisen, bezogen auf die Gesamtzahl an Repetiereinheiten.

Für den erfindungsgemäßen einzusetzenden halogenierten Isobuten-Isopren-Kautschuk hat es sich als besonders vorteilhaft erwiesen, die chlorierte und/oder bromierte Komponente zu verwenden, wobei chlorierter Isobuten-Isopren-Kautschuk nach Einschätzung der Erfinder besonders bevorzugt ist. Bevorzugt ist folglich eine erfindungsgemäße vulkanisierbare Zusammensetzung, wobei zumindest einer der halogenierten Isobuten-Isopren-Kautschuke, bevorzugt sämtliche der halogenierten Isobuten-Isopren-Kautschuke in der vulkanisierbaren Zusammensetzung, ausgewählt sind aus der Gruppe bestehend aus chlorierten und bromierten Isobuten-Isopren-Kautschuken, bevorzugt ausgewählt ist aus der Gruppe bestehend aus chlorierten Isobuten-Isopren-Kautschuken.

Insoweit haben die Erfinder der vorliegenden Erfindung festgestellt, dass es ganz besonders bevorzugt ist, wenn die erfindungsgemäße vulkanisierbare Zusammensetzung im Wesentlichen, bevorzugt ausschließlich, aus den vorstehend definierten Kautschukkomponenten besteht. Bevorzugt ist demnach eine erfindungsgemäße vulkanisierbare Zusammensetzung, wobei die Gesamtmenge an halogenierten Isobuten-Isopren-Kautschuken und Isobuten-Isopren-Kautschuken 95 bis 100 phr beträgt, bevorzugt 98 bis 100 phr, besonders bevorzugt 99 bis 100 phr, ganz besonders bevorzugt 100 phr beträgt.

Für bestimmte Ausgestaltungen, insbesondere wenn andere Prozessgase als Wasserdampf eingesetzt werden sollen, kann es jedoch vorteilhaft sein, die physikalisch-chemischen Eigenschaften erfindungsgemäßen vulkanisierbaren Zusammensetzung durch die Zugabe kleinerer Mengen an anderen Dien-Kautschuken optimal an die jeweiligen Erfordernisse der Anwendung einzustellen. Für bestimmte Anwendungen bevorzugt ist somit eine erfindungsgemäße vulkanisierbare Zusammensetzung, umfassend einen oder mehrere weitere Dienkautschuke in einer Gesamtmenge im Bereich von 0 bis 13 phr, bevorzugt 0 bis 9 phr, besonders bevorzugt 0 bis 5 phr. Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen. Bevorzugt ist der weitere Dienkautschuk ausgewählt aus der Gruppe bestehend aus natürlichem Polyisopren, synthetischem Polyisopren, epoxidiertem Polyisopren, Butadien-Kautschuk, lösungspolymerisiertem Styrol-Butadien-Kautschuk, emulsionspolymerisiertem Styrol-Butadien-Kautschuk, Polynorbornen, Ethylen-Propylen-Dien-Kautschuk, NitrilKautschuk, Acrylat-Kautschuk, Silikon-Kautschuk, Polysulfid-Kautschuk, Epichlorhydrin-Kautschuk, Styrol-Isopren-Butadien-Terpolymer, hydrierter Acrylnitrilbutadienkautschuk und hydriertem Styrol-Butadien-Kautschuk, wobei der Deinkautschuk besonders bevorzugt ausgewählt ist aus der Gruppe bestehend aus natürlichem Polyisopren (NR), synthetischem Polyisopren (IR), Butadien-Kautschuk (BR), lösungspolymerisiertem Styrol-Butadien-Kautschuk (SSBR) und emulsionspolymerisiertem Styrol-Butadien-Kautschuk (ESBR).

Nach Erkenntnis der Erfinder ist es mit Blick auf das Alterungsverhalten der aus der erfindungsgemäßen vulkanisierbaren Zusammensetzung herstellbaren Vulkanisate und Vulkanisationsbalge besonders vorteilhaft, den Gehalt an Chloropren-Kautschuk in der vulkanisierbaren Zusammensetzung gering zu halten. Bei dem im Stand der Technik regelmäßig eingesetzten Chloropren-Kautschuk handelt es sich in Übereinstimmung mit dem fachmännischen Verständnis um Chlorbutadien-Kautschuk, welcher durch Polymerisation von Chloropren, d. h. 2-Chlor-1,3-Butadien hergestellt werden kann und der regelmäßig das Kürzel CR trägt. Bevorzugt ist entsprechend eine erfindungsgemäße vulkanisierbare Zusammensetzung, wobei die Gesamtmenge von Chloropren-Kautschuk in der vulkanisierbaren Zusammensetzung weniger als 5 phr, bevorzugt weniger als 3 phr, besonders bevorzugt weniger als 1 phr, beträgt.

In besonders bevorzugten Ausgestaltungen wird in der erfindungsgemäßen vulkanisierbaren Zusammensetzung zudem ein Phenol-Formaldehyd-Harz vorgesehen, welches als Vernetzersystem fungieren kann. Mit entsprechenden Phenol-Formaldehyd-Harzen in den entsprechenden Gesamtmengen konnten in eigenen Versuchen der Erfinder ausgezeichnete Leistungsparameter für die herstellbaren Vulkanisationsbalge erreicht werden. Hierbei hat sich der Einsatz von Octylphenol-Formaldehyd-Harzen besonders bewährt, da diese nach Einschätzung der Erfinder eine besonders hohe Kompatibilität mit den eingesetzten halogenierten Isobuten-Isopren-Kautschuken sowie den nicht halogenierten Isobuten-Isopren-Kautschuken aufweisen. Bevorzugt ist somit eine erfindungsgemäße vulkanisierbare Zusammensetzung, umfassend ein oder mehrere Phenol-Formaldehyd-Harze, welche durch die Reaktion von Formaldehyd mit einem substituierten oder unsubstituierten Phenol herstellbar sind, in einer Gesamtmenge im Bereich von 5 bis 15 phr. Besonders bevorzugt ist eine erfindungsgemäße vulkanisierbare Zusammensetzung, umfassend ein oder mehrere Phenol-Formaldehyd-Harze, welche durch die Reaktion von Formaldehyd mit einem substituierten oder unsubstituierten Phenol herstellbar sind, in einer Gesamtmenge im Bereich von 6 bis 13 phr, bevorzugt im Bereich von 7 bis 11 phr. Bevorzugt ist insoweit auch eine erfindungsgemäße vulkanisierbare Zusammensetzung, wobei zumindest eines der Phenol-Formaldehyd-Harze, bevorzugt sämtliche der Phenol-Formaldehyd-Harze in der vulkanisierbaren Zusammensetzung, ausgewählt sind aus der Gruppe bestehend aus Phenol-Formaldehyd-Harzen, die durch Reaktion von Formaldehyd mit einem substituierten Phenol, bevorzugt einem Alkylphenol, herstellbar sind, wobei vorzugsweise zumindest eines der Phenol-Formaldehyd-Harze, bevorzugt sämtliche der Phenol-Formaldehyd-Harze, ausgewählt sind aus der Gruppe bestehend aus Phenol-Formaldehyd-Harzen, die durch Reaktion von Formaldehyd mit Octylphenol, bevorzugt 4-tert-Octylphenol, herstellbar sind.

Vor dem Hintergrund der vorstehenden Ausführungen ist es den Erfindern der vorliegenden Erfindung gelungen, eine besonders bevorzugte erfindungsgemäße vulkanisierbare Zusammensetzung zu identifizieren, mit der insbesondere hinsichtlich der Rissbildung und Rissfortsetzung im Material besonders vorteilhafte Eigenschaften erreicht werden konnten. Bevorzugt ist nämlich eine erfindungsgemäße vulkanisierbare Zusammensetzung, umfassend:
- einen oder mehrere halogenierte Isobuten-Isopren-Kautschuke in einer Gesamtmenge im Bereich von 5 bis 10 phr,
- einen oder mehrere Isobuten-Isopren-Kautschuke in einer Gesamtmenge im Bereich von 90 bis 95 phr, und
- ein oder mehrere Phenol-Formaldehyd-Harze, welche durch die Reaktion von Formaldehyd mit einem substituierten oder unsubstituierten Phenol herstellbar sind, in einer Gesamtmenge im Bereich von 7 bis 11 phr.

Um für die aus den erfindungsgemäßen vulkanisierbaren Zusammensetzungen herstellbaren Vulkanisate und Vulkanisationsbalge besonders vorteilhafte Reißeigenschaften zu erreichen, ist es besonders bevorzugt, in der vulkanisierbaren Zusammensetzung Füllstoffe vorzusehen, wobei insbesondere der Einsatz von Ruß nach Einschätzung der Erfinder besonders günstig ist, insbesondere weil hiermit eine im Vergleich zu silika-gefüllten Mischungen eine erhöhte Wärmeleitzahl erreicht werden kann. Bevorzugt ist somit eine erfindungsgemäße vulkanisierbare Zusammensetzung, umfassend einen oder mehrere Füllstoffe in einer Gesamtmenge im Bereich von 10 bis 150 phr, bevorzugt im Bereich von 30 bis 100 phr, wobei vorzugsweise zumindest einer der Füllstoffe, bevorzugt sämtliche Füllstoffe in der vulkanisierbaren Zusammensetzung, Ruß sind.

Ruß ist ein unpolarer Füllstoff und wird besonders bevorzugt in Mengen von 40 bis 100 phr, ganz besonders bevorzugt in Mengen von 40 bis 80 phr, eingesetzt. Wiederum besonders bevorzugt ist es, wenn die vulkanisierbare Zusammensetzung 57 bis 67 phr Ruß enthält. Hiermit werden besonders gute Mischungseigenschaften im Hinblick auf die Reißeigenschaften erzielt. Der eingesetzte Ruß weist dabei bevorzugt eine Jodadsorptionszahl gemäß ASTM D 1510 von 30 bis 110 mg/g, besonders bevorzugt von 60 bis 110 mg/g und ganz besonders bevorzugt von 70 bis 90 mg/g, auf. Die DBP-Zahl gemäß ASTM D 2414 des eingesetzten Rußes beträgt bevorzugt 20 bis 100 ml/100g, besonders bevorzugt von 50 bis 100 ml/100g und ganz besonders bevorzugt von 60 bis 80 ml/100g. Ein derartiger Ruß, mit dem in den erfindungsgemäßen vulkanisierbaren Zusammensetzungen besonders gute Eigenschaften erzielt werden können, ist beispielsweise ein Ruß des Typs N 326 (Jodadsorptionszahl = 82 mg/g; DBP-Zahl = 72 ml/100g).

Die vulkanisierbare Zusammensetzung kann zusätzlich oder alternativ einen polaren Füllstoff enthalten. Als polare Füllstoffe können alle dem Fachmann bekannten polaren Füllstoffe, wie beispielsweise Aluminiumhydroxid, Titandioxid, Magnesiumoxid, gefällte Kieselsäure und Schichtsilikate verwendet werden. Bevorzugt werden als polare Füllstoffe Siliziumoxid-basierte Füllstoffe, wie Kieselsäure eingesetzt. Bevorzugt wird als polarer Füllstoff Kieselsäure verwendet. Die Begriffe "Kieselsäure" und "Silika" werden im Rahmen der vorliegenden Erfindung und in Übereinstimmung mit dem fachmännischen Verständnis synonym verwendet und bezeichnen jeweils Siliziumdioxide. Die in der Kautschukindustrie eingesetzten Kieselsäuren sind in der Regel gefällte Kieselsäuren, die insbesondere nach ihrer Oberfläche charakterisiert werden. Zur Charakterisierung werden dabei die Stickstoff-Oberfläche (BET, Methode nach Brunauer, Emmett, Teller) gemäß DIN ISO 9277 und DIN 66132 als Maß für die innere und äußere Füllstoffoberfläche in m²/g und die CTAB-Oberfläche gemäß ASTM D 3765 als Maß für die äußere Oberfläche, die oftmals als die kautschukwirksame Oberfläche angesehen wird, in m²/g angegeben.

Die in erfindungsgemäßen vulkanisierbaren Zusammensetzungen bevorzugt eingesetzten Kieselsäuren weisen eine Stickstoff-Oberfläche von größer oder gleich 100 m²/g auf, bevorzugt zwischen 100 und 250 m²/g, besonders bevorzugt zwischen 140 und 200 m²/g. Des Weiteren weisen die eingesetzten Kieselsäuren eine CTAB-Oberfläche zwischen 100 und 200 m²/g, bevorzugt zwischen 120 und 180 m²/g und besonders bevorzugt zwischen 140 und 180 m²/g auf.

Es kann als Vorteil der erfindungsgemäßen vulkanisierbaren Zusammensetzung angesehen werden, dass diese nach Einschätzung der Erfinder durch die Zugabe von weiteren Additiven spezifisch in ihren physikalisch-chemischen Eigenschaften modifiziert und auf die jeweiligen Anforderungen angepasst werden kann, ohne dass die erfindungsgemäß beobachtete hohe Beständigkeit beeinträchtigt wird. Bevorzugt ist vor diesem Hintergrund eine erfindungsgemäße vulkanisierbare Zusammensetzung, umfassend ein oder mehrere Additive in einer Gesamtmenge im Bereich von 1 bis 100 phr, bevorzugt im Bereich von 5 bis 70 phr, besonders bevorzugt im Bereich von 10 bis 30 phr, wobei die Additive ausgewählt sind aus der Gruppe bestehend aus Verstärkerharzen, Kupplungsagenzien, Weichmachern, Ozonschutzmitteln, Alterungsschutzmitteln, UV-Schutzmitteln und Verarbeitungshilfsmitteln.

Als Verstärkerharze können beispielsweise Resorcin-Formaldehyd-Harze, beispielsweise Resorcin-Hexamethoxymethylmelamin-Harze (HMMM) oder Resorcin-Hexamethylentetramin-Harze (HEXA), oder modifizierte Phenolharze eingesetzt werden.

Zur Verbesserung der Verarbeitbarkeit und zur Anbindung von Kieselsäure und anderer ggf. vorhandener polarer Füllstoffe an den Kautschuk können Kupplungsagenzien in der vulkanisierbaren Zusammensetzung eingesetzt werden. Als Kupplungsagenzien können dabei grundsätzlich alle dem Fachmann bekannten Kupplungsagenzien verwendet werden. Die Kupplungsagenzien, bevorzugt Silan-Kupplungsagenzien, werden bevorzugt in Mengen bis zu 20 phr, bevorzugt in Mengen von 0,1 bis 15 phr, besonders bevorzugt in Mengen von 0,5 bis 10 phr, eingesetzt.

Es können in der vulkanisierbaren Zusammensetzung auch Mengen bis zu 20 phr, bevorzugt Mengen von 0,1 bis 10 phr, besonders bevorzugt Mengen von 0,1 bis 5 phr, wenigstens eines Weichmachers vorhanden sein. Dieser Weichmacher ist bevorzugt ausgewählt aus der Gruppe bestehend aus Mineralölen, synthetischen Weichmachern, Fettsäuren, Fettsäurederivaten, Weichmacherharze, Faktisse, Glyceriden, Terpenen, Biomass-To-Liquid-Ölen (BTL-Öle) und Rubber-To-Liquid-Ölen (RTL-Öle). Unter Weichmacherharzen sind insbesondere solche Kohlenwasserstoffharze zu verstehen, die keine Verstärkerharze sind.

Alterungsschutzmittel sind dem Fachmann für diesen Zweck bekannte Verbindungen, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD) oder 2,2,4-Trimethyl-1,2-dihydrochinolin (TMQ). Mastikationshilfsmittel sind bspw. Verbindungen wie z. B. 2,2'-Dibenzamidodiphenyldisulfid (DBD).

Die Aktivatoren sind beispielsweise Zinkoxid, Stearinsäure oder deren Salze. Bevorzugt beträgt die Menge an Zinkoxid in der vulkanisierbaren Zusammensetzung 0,1 bis 10 phr, besonders bevorzugt 2 bis 10 phr und ganz besonders bevorzugt 2 bis 6 phr. Die erfindungsgemäße vulkanisierbare Zusammensetzung kann bspw. Stearinsäure oder deren Salze in Mengen von bis zu 1 phr enthalten.

Der Vorteil der vorstehend beschriebenen erfindungsgemäßen vulkanisierbaren Zusammensetzung ist darin zu sehen, dass daraus durch Vulkanisation Vulkanisate hergestellt werden können, die über vorteilhafte physikalisch-chemische Eigenschaften verfügen. Entsprechend sind auch die aus entsprechenden erfindungsgemäßen vulkanisierbaren Zusammensetzungen hergestellten Vulkanisate als besonders vorteilhaft anzusehen. Die Vulkanisation erfolgt dabei in Übereinstimmung mit dem fachmännischen Verständnis durch etablierte Verfahren, beispielsweise durch den Einsatz von Metalloxid als Aktivatoren. Die Vulkanisation erfolgt dabei vorteilhafterweise in einem Temperaturbereich von 120 bis 240 °C, bevorzugt 140 bis 220 °C.

Die Erfindung betrifft somit zudem ein Vulkanisat, herstellbar durch Vulkanisation einer erfindungsgemäßen vulkanisierbaren Zusammensetzung.

In Übereinstimmung mit dem fachmännischen Verständnis wird das Vulkanisat hierbei über die zu seiner Herstellung eingesetzten Ausgangsmaterialien definiert, sowie sie vorstehend für die erfindungsgemäße vulkanisierbare Zusammensetzung angegeben sind. Wie bei allen ungeordneten Materialien, beispielsweise Polymeren, ist dies der einzige praktikable Weg, um das erhaltene Material effizient zu beschreiben, da eine strukturelle Charakterisierung quasi unmöglich ist.

Offenbart wird entsprechend auch die Verwendung einer erfindungsgemäßen vulkanisierbaren Zusammensetzung bei der Herstellung von erfindungsgemäßen Vulkanisaten und erfindungsgemäßen Vulkanisationsbalgen zur Verwendung bei der Vulkanisation von Fahrzeugreifen, insbesondere von Fahrzeugreifen, die das Material Rayon umfassen, insbesondere in der Karkasse.

Aus dem beispielsweise wie vorstehend beschrieben durch Vulkanisation erhaltenen Vulkanisat lassen sich erfindungsgemäße Vulkanisationsbalge erhalten. Diese erfindungsgemäßen Vulkanisationsbalge sind besonders vorteilhaft, weil diese beim Einsatz in der Fertigung von Fahrzeugluftreifen eine besonders hohe Beständigkeit aufweisen und auch nach einer Vielzahl von Vulkanisationszyklen einsatzfähig bleiben, ohne die Eigenschaften der damit herstellbaren Fahrzeugluftreifen zu negativ zu beeinflussen.

Die Erfindung betrifft somit insbesondere auch einen Vulkanisationsbalg zur Verwendung bei der Vulkanisation von Fahrzeugreifen, insbesondere bei der Vulkanisation von PKW-, LKW- und Spezialreifen, umfassend ein erfindungsgemäßes Vulkanisat.

Erfindungsgemäß umfasst der erfindungsgemäße Vulkanisationsbalg das Vulkanisat, welches aus der erfindungsgemäßen vulkanisierbaren Zusammensetzung durch Vulkanisation erhalten wird. In einer besonders bevorzugten Ausführungsform besteht der erfindungsgemäße Vulkanisationsbalg im Wesentlichen vollständig aus diesem Vulkanisat, d. h. er umfasst keine weiteren Bestandteile.

In einer alternativen Ausführungsform kann der erfindungsgemäße Vulkanisationsbalg neben dem erfindungsgemäßen Vulkanisat jedoch noch weitere Bestandteile umfassen, beispielsweise Streben und/oder Verstärkungskorde, die dem Vulkanisationsbalg zusätzliche Struktur und/oder Stabilität verleihen.

Da sich beim Einsatz der erfindungsgemäßen Vulkanisationsbalge bei der Vulkanisation von Fahrzeugreifen die vorstehend beschriebenen Vorteile zeigen, ist die Verwendung entsprechender Vulkanisationsbalge bei der Herstellung von Fahrzeugreifen entsprechend vorteilhaft.

Die Erfindung betrifft somit ebenfalls die Verwendung eines erfindungsgemäßen Vulkanisationsbalgs bei der Vulkanisation von Fahrzeugreifen, insbesondere von Fahrzeugreifen, die das Material Rayon umfassen, zur Verlängerung des Wartungs- und/oder Austauschintervalls der Vulkanisationsvorrichtung.

Als ganz besonders vorteilhaft hat es sich hierbei überraschenderweise erwiesen, dass die Wiederverwendbarkeit von erfindungsgemäßen Vulkanisationsbalgen selbst in der Herstellung solcher Fahrzeugreifen besonders hoch ist, die das Material Rayon umfassen. Entsprechende Fahrzeugreifen, die das Material Rayon umfassen, sind nach Einschätzung der Erfinder in der Praxis nämlich regelmäßig besonders anfällig für Defekte, die beim Einsatz von gealterten Vulkanisationsbalgen auftreten können. Ohne an diese Theorie gebunden sein zu wollen, nehmen die Erfinder der vorliegenden Erfindung an, dass dies auf den ungewollten Austritt von Wasserdampf aus dem Vulkanisationsbalg, bspw. durch Diffusion oder durch kleinste Risse, zurückzuführen ist, der im hygroskopischen Rayon zu einer Veränderung des Modul führt, woraus sich die Eigenschaften des hergestellten Fahrzeugluftreifens unvorteilhaft verändern können.

Mit einem erfindungsgemäßen Vulkanisationsbalg, welcher das erfindungsgemäße Vulkanisat umfasst, welches durch Vulkanisation aus der erfindungsgemäßen vulkanisierbaren Zusammensetzung herstellbar ist, lässt sich jedoch eine besonders vorteilhafte Dampfretention erhalten, die auch über viele Vulkanisationszyklen bestehen bleibt. Die Erfinder der vorliegenden Erfindung vermuten hierin eine der Ursachen für die bessere Leistungsfähigkeit der erfindungsgemäßen Vulkanisationsbalge bei der Herstellung von Fahrzeugreifen, die das Material Rayon umfassen.

Bei der Verwendung erfindungsgemäßer Vulkanisationsbalge bei der Vulkanisation von Fahrzeugreifen wird vorteilhafterweise eine Verlängerung des Wartungs- und/oder Austauschintervalls der Vulkanisation verwendeten Vulkanisationsvorrichtung erreicht.

Im Lichte der vorstehenden Ausführungen ist für den Fachmann klar ersichtlich, dass die Erfindung auch auf eine Vulkanisationsvorrichtung gerichtet ist, die neben einer herkömmlichen Vulkanisationsform auch einen erfindungsgemäßen Vulkanisationsbalg umfasst. Die Erfindung betrifft entsprechend eine Vulkanisationsvorrichtung zur Vulkanisation von Fahrzeugreifen, umfassend eine Vulkanisationsform und einen erfindungsgemäßen Vulkanisationsbalg.

In besonders bevorzugten Ausgestaltungen kann die erfindungsgemäße Vulkanisationsvorrichtung darüber hinaus weitere erfindungsgemäße Vulkanisationsbalge umfassen, die als Reserve und Austauschteile für den erfindungsgemäßen Vulkanisationsbalg vorgesehen sind.

Offenbart wird zudem ein Verfahren zur Herstellung von Fahrzeugreifen umfassend die Schritte:
A) Einbringen eines unvulkanisierten Fahrzeugreifens in die Vulkanisationsform einer erfindungsgemäßen Vulkanisationsvorrichtung, umfassend einen erfindungsgemäßen Vulkanisationsbalg zur Einpassung in den Innenraum des unvulkanisierten Fahrzeugreifens, und
B) Vulkanisieren des unvulkanisierten Fahrzeugreifens, wobei der erfindungsgemäße Vulkanisationsbalg durch ein eingebrachtes Prozessgas, bevorzugt Wasserdampf, expandiert wird, um den unvulkanisierten Fahrzeugreifen gegen die, bevorzugt strukturierte, Innenwand der Vulkanisationsform zur drücken.

Das offenbarte Verfahren zur Herstellung von Fahrzeugreifen ist besonders vorteilhaft, weil es durch den Einsatz von erfindungsgemäßen Vulkanisationsbalgen bzw. einer erfindungsgemäßen Vulkanisationsvorrichtung, welche die erfindungsgemäßen Vulkanisationsbalge umfasst, besonders zeit- und kosteneffizient betrieben werden kann, da die Vulkanisationsbalge seltener ausgetauscht werden müssen und somit pro Zeit eine größere Zahl von Fahrzeugreifen hergestellt werden können, die vorteilhafterweise über besonders gleichbleibende Eigenschaften verfügen, auch wenn der erfindungsgemäße Vulkanisationsbalg zuvor bereits in mehreren Vulkanisationszyklen eingesetzt wurde.

Nachfolgend werden bevorzugte Ausführungsformen der Erfindung unter Bezugnahme auf die beiliegenden experimentellen Daten näher erläutert und beschrieben.

Es wurden vulkanisierbare Zusammensetzungen V1 und E1 bereitgestellt, deren Zusammensetzung in Tabelle 1 zusammengefasst ist. Die Herstellung der vulkanisierbaren Zusammensetzungen erfolgt nach dem in der Kautschukindustrie üblichen Verfahren in einem Labortangentialmischer, bei dem zunächst in einer oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die vulkanisierbare Zusammensetzung erzeugt.

**Tabelle 1**

| Bestandteile | Einheit | V1 | E1 |
|---|---|---|---|
| Chlorierter Isobuten-Isopren-Kautschuk^{a)} | phr | - | 10 |
| Isobuten-Isopren-Kautschuk^{b)} | phr | 95 | 90 |
| Chloropren-Kautschuk^{c)} | phr | 5 | - |
| Ruß^{d)} | phr | 54 | 54 |
| Rizinusöl^{e)} | phr | 5 | 5 |
| Weichmacher^{f)} | phr | 4 | 4 |
| Zinkoxid^{g)} | phr | 5 | 5 |
| Zinkstearat^{h)} | phr | 1 | 1 |
| Fettsäurederivateⁱ⁾ | phr | 1 | 1 |
| Octylphenol-Formaldehyd^{j)} | phr | 9 | 9 |

| | | | |
|---|---|---|---|
| a) CBK-139der Firma NIZHNEKAMSKNEFTEKHIM , b) X_BUTYL RB 301 der Firma ARLANXEO, c) NEOPRENE WM-1 der Firma DENKA PERFORMANCE ELASTOMER LLC, d) CORAX N 220 der Firma KG DEUTSCHE GASRUSSWERKE GMBH, e) CASTOR OIL der Firma FAUTH, f) STRUKTOL 40 MS-F der Firma SCHILL+SEILACHER "STRUKTOL" GmbH, g) ZNO S-6 der Firma SLOVZINK, h) LIGASTAR ZN 101 C der Firma PETER GREVEN GMBH & CO KG, i) PAT 757/C der Firma WUERTZ GMBH & CO. KG, j) SL-7015 Modified der Firma Sino Legend Chemical Co., Ltd. | | | |

Aus diesen vulkanisierbaren Zusammensetzungen wurden durch Vulkanisation bei 210 °C (13 min, isotherm) Vulkanisate hergestellt. Die physikalischen Eigenschaften der vulkanisierbaren Zusammensetzungen und der daraus erhaltenen Vulkanisate ist in Tabelle 2 zusammengestellt.

**Tabelle 2**

| Größen | Einheit | V1 | E1 |
|---|---|---|---|
| Vernetzungszeit | min | 17 | 14,4 |
| Mooney Viskosität (ML1+4) | Mooney Einheiten | 83,6 | 81,2 |
| Zugfestigkeit | MPa | 13,3 | 14,6 |
| Bruchdehnung | % | 776,4 | 742,4 |
| Kraft (300 % Dehnung) | MPa | 4,5 | 5,4 |
| Härte (Shore A, RT) | Shore A | 59,6 | 56,1 |
| Rückprallelastizität (RT) | % | 9,2 | 8,4 |
| Durchlassrate (Frisch) | g/(m² d) | 0,2 | 0,2 |
| Durchlassrate (Dampfgealtert) | g/(m² d) | 0,5 | 0,3 |
| Dampfrückhaltevermögen (48 h bei 200 °C) | % | 64,70 | 68,59 |

Sofern nicht anders angegeben, bezeichnen die nachfolgend angeführten Normen und Messvorschriften jeweils die am 1. Juli 2021 gültige Fassung.

Die Mooney Viskosität bei Raumtemperatur wurde mit einem Rotor gemäß DIN 53 523 nach ASTM D 1646 BS ISO 289 bestimmt.

Die Shore-A-Härte bei Raumtemperatur wurde gemäß DIN 53 505 bestimmt.

Die Bruchdehnung, die Kraft bei 300 % Dehnung und die Rückprallelastizität wurden mit einer Ringgeometrie nach DIN 53504-R1 (Dichtebestimmung des Ringes nach DIN EN ISO 1183-2) in einem Messverfahren nach DIN ISO 5725 bzw. DIN 53512:2000-04 mit einer Testvorrichtung vom Typ 5109 der Firma Zwick bestimmt.

Die Durchlassraten und das Dampfrückhaltevermögen wurden gemäß der ASTM F-1249 mit einem Mocon Permatran-W 3/33 bestimmt, wobei die Angabe in g/(m² d) bezeichnet, wie viele Gramm pro Tag durch einen Quadratmeter hindurchtreten.

Zudem wurde an dampfgealterten Proben (48 h bei 200 °C) die Rissentstehung (bei 1024 Durchläufen) und die Rissfortsetzung (bei 512 Durchläufen) gemäß der Norm ISO 132 untersucht.

**Tabelle 3**

| Größen | Einheit | V1 | E1 |
|---|---|---|---|
| De Mattia Rissentstehung | | | |
| Riss-Klasse 1 | - | 6 | 0 |
| Riss-Klasse 2 | - | 1 | 0 |

| De Mattia Rissfortsetzung | | | |
|---|---|---|---|
| Risslänge 1 | mm | 25 | 10 |
| Risslänge 2 | mm | 25 | 10 |

Aus den vorstehenden Messdaten ist ersichtlich, dass mit erfindungsgemäßen vulkanisierbaren Zusammensetzungen durch Vulkanisation besonders vorteilhafte Vulkanisate erhalten werden können, die sich ausgezeichnet für den Einsatz in Vulkanisationsbalgen eignen.

Insbesondere werden für erfindungsgemäße Vulkanisate vorteilhafterweise niedrige Durchlassraten und ein hohes Dampfrückhaltevermögen festgestellt. Aus den in Tabelle 3 zusammengestellten Daten ist zudem ersichtlich, dass mit erfindungsgemäßen Vulkanisaten gegenüber dem Stand der Technik ausgezeichnete Werte im Bereich der Rissentstehung erreicht werden und dass die Rissfortsetzung in erfindungsgemäßen Materialien deutlich verringert ist.

## Patentansprüche

1. Vulkanisierbare Zusammensetzung für die Herstellung eines Vulkanisationsbalges, umfassend:
- einen oder mehrere halogenierte Isobuten-Isopren-Kautschuke in einer Gesamtmenge im Bereich von 2 bis 15 phr, und
- einen oder mehrere Isobuten-Isopren-Kautschuke in einer Gesamtmenge im Bereich von 85 bis 98 phr.

2. Vulkanisierbare Zusammensetzung nach Anspruch 1, umfassend einen oder mehrere halogenierte Isobuten-Isopren-Kautschuke in einer Gesamtmenge im Bereich von 3 bis 12 phr, bevorzugt im Bereich von 5 bis 10 phr.

3. Vulkanisierbare Zusammensetzung nach einem der Ansprüche 1 oder 2, umfassend einen oder mehrere Isobuten-Isopren-Kautschuke in einer Gesamtmenge im Bereich von 88 bis 97 phr, bevorzugt im Bereich von 90 bis 95 phr.

4. Vulkanisierbare Zusammensetzung nach einem der Ansprüche 1 bis 3, wobei zumindest einer der halogenierten Isobuten-Isopren-Kautschuke, bevorzugt sämtliche der halogenierten Isobuten-Isopren-Kautschuke in der vulkanisierbaren Zusammensetzung, ausgewählt sind aus der Gruppe bestehend aus chlorierten und bromierten Isobuten-Isopren-Kautschuken, bevorzugt ausgewählt sind aus der Gruppe bestehend aus chlorierten Isobuten-Isopren-Kautschuken.

5. Vulkanisierbare Zusammensetzung nach einem der Ansprüche 1 bis 4, umfassend ein oder mehrere Phenol-Formaldehyd-Harze, welche durch die Reaktion von Formaldehyd mit einem substituierten oder unsubstituierten Phenol herstellbar sind, in einer Gesamtmenge im Bereich von 5 bis 15 phr, bevorzugt im Bereich von 6 bis 13 phr, besonders bevorzugt im Bereich von 7 bis 11 phr

6. Vulkanisierbare Zusammensetzung nach einem der Ansprüche 1 bis 5, umfassend einen oder mehrere Füllstoffe in einer Gesamtmenge im Bereich von 10 bis 150 phr, bevorzugt im Bereich von 30 bis 100 phr, wobei vorzugsweise zumindest einer der Füllstoffe, bevorzugt sämtliche Füllstoffe, in der vulkanisierbaren Zusammensetzung, Ruß sind.

7. Vulkanisat, herstellbar durch Vulkanisation einer vulkanisierbaren Zusammensetzung nach einem der Ansprüche 1 bis 6.

8. Vulkanisationsbalg zur Verwendung bei der Vulkanisation von Fahrzeugreifen, insbesondere bei der Vulkanisation von PKW-, LKW- und Spezialreifen, umfassend ein Vulkanisat nach Anspruch 7.

9. Vulkanisationsvorrichtung zur Vulkanisation von Fahrzeugreifen, umfassend eine Vulkanisationsform und einen Vulkanisationsbalg nach Anspruch 8.

10. Verwendung eines Vulkanisationsbalgs nach Anspruch 8 bei der Vulkanisation von Fahrzeugreifen, insbesondere von Fahrzeugreifen, die das Material Rayon umfassen, zur Verlängerung des Wartungs- und/oder Austauschintervalls der Vulkanisationsvorrichtung.

## Claims

1. Vulcanizable composition for producing a vulcanization bladder, comprising:
- one or more halogenated isobutene-isoprene rubbers in a total amount in the range from 2 to 15 phr and
- one or more isobutene-isoprene rubbers in a total amount in the range from 85 to 98 phr.

2. Vulcanizable composition according to Claim 1, comprising one or more halogenated isobutene-isoprene rubbers in a total amount in the range from 3 to 12 phr, preferably in the range from 5 to 10 phr.

3. Vulcanizable composition according to either of Claims 1 or 2, comprising one or more isobutene-isoprene rubbers in a total amount in the range from 88 to 97 phr, preferably in the range from 90 to 95 phr.

4. Vulcanizable composition according to any of Claims 1 to 3, wherein at least one of the halogenated isobutene-isoprene rubbers, preferably all of the halogenated isobutene-isoprene rubbers in the vulcanizable composition, are selected from the group consisting of chlorinated and brominated isobutene-isoprene rubbers, preferably are selected from the group consisting of chlorinated isobutene-isoprene rubbers.

5. Vulcanizable composition according to any of Claims 1 to 4, comprising one or more phenol-formaldehyde resins producible by reaction of formaldehyde with a substituted or unsubstituted phenol in a total amount in the range from 5 to 15 phr, preferably in the range from 6 to 13 phr, particularly preferably in the range from 7 to 11 phr.

6. Vulcanizable composition according to any of Claims 1 to 5, comprising one or more fillers in a total amount in the range from 10 to 150 phr, preferably in the range from 30 to 100 phr, wherein preferably at least one of the fillers, preferably all of the fillers, in the vulcanizable composition, are carbon black.

7. Vulcanizate producible by vulcanization of a vulcanizable composition according to any of Claims 1 to 6.

8. Vulcanization bladder for use in the vulcanization of vehicle tires, especially in the vulcanization of car, truck and specialty tires, comprising a vulcanizate according to Claim 7.

9. Vulcanization apparatus for vulcanization of vehicle tires, comprising a vulcanization mold and a vulcanization bladder according to Claim 8.

10. Use of a vulcanization bladder according to Claim 8 in the vulcanization of vehicle tires, especially of vehicle tires comprising the material rayon, for extending the maintenance and/or replacement interval of the vulcanization apparatus.

## Revendications

1. Composition vulcanisable pour la production d'un soufflet de vulcanisation, comprenant :
- un ou plusieurs caoutchoucs isobutène-isoprène halogénés en une quantité totale dans la plage de 2 à 15 phr, et
- un ou plusieurs caoutchoucs isobutène-isoprène en une quantité totale dans la plage de 85 à 98 phr.

2. Composition vulcanisable selon la revendication 1, comprenant un ou plusieurs caoutchoucs isobutène-isoprène halogénés en une quantité totale dans la plage de 3 à 12 phr, de préférence dans la plage de 5 à 10 phr.

3. Composition vulcanisable selon l'une quelconque des revendications 1 et 2, comprenant un ou plusieurs caoutchoucs isobutène-isoprène en une quantité totale dans la plage de 88 à 97 phr, de préférence dans la plage de 90 à 95 phr.

4. Composition vulcanisable selon l'une quelconque des revendications 1 à 3, dans laquelle au moins un des caoutchoucs isobutène-isoprène halogénés, de préférence la totalité des caoutchoucs isobutène-isoprène halogénés dans la composition vulcanisable, sont choisis dans le groupe constitué par les caoutchoucs isobutène-isoprène chlorés et bromés, de préférence sont choisis dans le groupe constitué par les caoutchoucs isobutène-isoprène chlorés.

5. Composition vulcanisable selon l'une quelconque des revendications 1 à 4, comprenant une ou plusieurs résines phénol-formaldéhyde, qui peuvent être préparées par la réaction de formaldéhyde avec un phénol substitué ou non substitué, en une quantité totale dans la plage de 5 à 15 phr, de préférence dans la plage de 6 à 13 phr, de façon particulièrement préférée dans la plage de 7 à 11 phr.

6. Composition vulcanisable selon l'une quelconque des revendications 1 à 5, comprenant une ou plusieurs charges en une quantité totale dans la plage de 10 à 150 phr, de préférence dans la plage de 30 à 100 phr, de préférence au moins une des charges, de préférence la totalité des charges, dans la composition vulcanisable, consistant en noir de carbone.

7. Vulcanisat, pouvant être produit par vulcanisation d'une composition vulcanisable selon l'une quelconque des revendications 1 à 6.

8. Soufflet de vulcanisation destiné à l'utilisation dans la vulcanisation de pneumatiques de véhicules, en particulier dans la vulcanisation de pneumatiques d'automobiles, de camions et de pneumatiques spéciaux, comprenant un vulcanisat selon la revendication 7.

9. Dispositif de vulcanisation destiné à la vulcanisation de pneumatiques de véhicules, comprenant un moule de vulcanisation et un soufflet de vulcanisation selon la revendication 8.

10. Utilisation d'un soufflet de vulcanisation selon la revendication 8 dans la vulcanisation de pneumatiques de véhicules, en particulier de pneumatiques de véhicules qui comprennent le matériau rayonne, pour l'allongement de l'intervalle d'entretien et/ou de remplacement du dispositif de vulcanisation.
